# EUROPÄISCHE PATENTSCHRIFT

(11) **EP 1 891 343 B1**
(45) Veröffentlichungstag und Bekanntmachung des Hinweises auf die Patenterteilung: **29.10.2008**
(21) Anmeldenummer: 06761650.8
(22) Anmeldetag: 14.06.2006
(51) Int. Cl.: F16C 11/06

(54) **KUGELGELENK MIT SENSOREINRICHTUNG UND VERFAHREN ZUR DICHTIGKEITSERKENNUNG**
BALL-AND-SOCKET JOINT WITH SENSOR SYSTEM AND TIGHTNESS DETECTION METHOD
JOINT A ROTULE DOTE D'UN DISPOSITIF DETECTEUR ET PROCEDE DE DETECTION D'ETANCHEITE

(30) Priorität: 15.06.2005 DE 102005027825
(43) Veröffentlichungstag der Anmeldung: 27.02.2008
(73) Patentinhaber: ZF Friedrichshafen AG, 88038 Friedrichshafen (DE)
(72) Erfinder: KRUSE, Jochen, 49088 Osnabrück (DE); SPRATTE, Joachim, 49090 Osnabrück (DE); KLANK, Michael, 49084 Osnabrück (DE)
(86) Internationale Anmeldenummer: PCT/DE2006/001018
(87) Internationale Veröffentlichungsnummer: WO 2006/133681

(56) Entgegenhaltungen:
- DE-A1- 10 347 814

## Beschreibung

Die Erfindung betrifft ein Kugelgelenk mit Sensoreinrichtung, beispielsweise für ein Achssystem oder eine Radaufhängung eines Kraftfahrzeuges, nach dem Oberbegriff des Patentanspruchs 1. Ferner betrifft die Erfindung ein Verfahren zur Dichtigkeitserkennung an einem Kugelgelenk gemäß Patentanspruch 9.

Kugelgelenke der eingangs genannten Art kommen beispielsweise, jedoch keineswegs ausschließlich, am Fahrwerk bzw. an der Radaufhängung von Kraftfahrzeugen zum Einsatz. Die gattungsgemäßen Kugelgelenke umfassen dabei eine Sensoreinrichtung, mit der sich die Dichtigkeit des Dichtungsbalgs des Kugelgelenks überwachen lässt. Eine rechtzeitige Erkennung von Undichtigkeiten am Dichtungsbalg von Kugelgelenken ist insbesondere dort von entscheidender Bedeutung, wo Kugelgelenke sicherheitsrelevante Bauteile darstellen. Dies ist insbesondere im Bereich des Fahrwerks oder der Lenkung von Kraftfahrzeugen der Fall, wo der Ausfall eines Kugelgelenks während der Fahrt fatale Folgen nach sich ziehen kann.

Die beispielsweise im Betrieb eines Kraftfahrzeugs auftretenden häufigen Temperaturwechsel und Steinschläge, die Einwirkung von diversen Betriebsstoffen und Salzwasser sowie die permanente mechanische Belastung können mit der Zeit dazu führen, dass die Dichtungsbälge von Kugelgelenken porös, rissig oder sogar undicht werden. Nachfolgend können Wasser, Salzwasser oder andere aggressive chemische Substanzen eindringen, was zu rascher Korrosion und zum nachfolgenden Versagen des Gelenks führen kann.

Wird somit ein beschädigter Dichtungsbalg nicht innerhalb kürzester Zeit erkannt und ausgetauscht, so kommt es infolge eindringender, schädlicher Substanzen zur baldigen Korrosion der Gelenkkugel und zu damit verbundenen Ausfällen bzw. jedenfalls zu sicherheitskritischen Situationen. Lässt sich andererseits ein undicht gewordener Dichtungsbalg rechtzeitig erkennen, so kann derartigen, in Bezug auf die Fahrsicherheit eines Kraftfahrzeugs bedenklichen Situationen wirksam vorgebeugt werden.

Ferner ist eine derartige Einrichtung zur Erkennung der Dichtigkeit des Dichtungsbalgs eines Kugelgelenks z.B. auch für den Einsatz in der Entwicklungsphase des Kugelgelenks im Versuch geeignet. In diesem Zusammenhang lässt sich - beispielsweise bei einem Testlauf in der Klimakammer, die während des Versuchs unter Umständen nicht zugänglich ist - die Dichtigkeit des Elastomerbalgs permanent verfolgen. Außerdem kann auf diese Weise der Zeitpunkt des ersten Schadenseintritts exakt bestimmt werden, was die genau Auswertung der Versuchsergebnisse erleichtert und verbessert.

Ein Kugelgelenk mit einer Einrichtung zur Erkennung von Undichtigkeiten am Dichtungsbalg ist beispielsweise aus der DE 103 47 814 bekannt. Dieses Kugelgelenk weist zur Erkennung von Undichtigkeiten des Dichtungsbalgs einen ins Kugelgelenk eingebauten Feuchtigkeitssensor auf. Der Feuchtigkeitssensor dient dazu, etwa durch den undicht gewordenen Dichtungsbalg eingedrungenes Wasser zu erkennen und daraufhin die Ausgabe eines Warnsignals zu veranlassen.

Die Verwendung eines Feuchtigkeitssensors zur Erkennung von Undichtigkeiten des Dichtungsbalgs ist jedoch nicht unproblematisch. Denn Feuchtigkeitssensoren haben den Nachteil, empfindlich beispielsweise gegenüber Salzwasser und Schmierfetten zu sein. Gemäß der Lehre der genannten Druckschrift wird versucht, dieser Problematik entgegenzuwirken, indem der Feuchtigkeitssensor teilweise vom Innenraum des Kugelgelenks entkoppelt bzw. getrennt untergebracht wird, während die Verbindung zwischen Feuchtigkeitssensor und Gelenkinnenraum nur noch durch einen schmalen Spalt gewährleistet ist.

Hierdurch verzögert sich jedoch das Ansprechverhalten des Feuchtigkeitssensors. Zudem ist eine vollständige Kapselung des Feuchtigkeitssensors gegenüber schädlichen Substanzen nicht möglich, da auf diese Weise im Schadensfall eingedrungene Feuchtigkeit nicht mehr zum Sensor gelangen kann, weshalb dann auch keine Erkennung der Undichtigkeit mehr erfolgen würde.

Mit diesem Hintergrund ist es Aufgabe der vorliegenden Erfindung, ein Kugelgelenk sowie ein Verfahren zur Dichtigkeitserkennung an einem Kugelgelenk zu schaffen, womit sich die genannten Nachteile des Standes der Technik überwinden lassen. Insbesondere soll dabei eine rasche und zuverlässige Erkennung von Undichtigkeiten des Dichtungsbalgs möglich sein, ohne dass die Gefahr der Beschädigung des verwendeten Sensors durch Betriebsstoffe oder eingedrungenes Wasser entsteht.

Diese Aufgabe wird durch ein Kugelgelenk mit den Merkmalen des Patentanspruchs 1 bzw. durch ein Verfahren mit den Merkmalen des Patentanspruchs 9 gelöst. Bevorzugte Ausführungsformen sind Gegenstand der Unteransprüche.

Das erfindungsgemäße Kugelgelenk umfasst zunächst einmal in an sich bekannter Weise ein im Wesentlichen ring- oder topfförmiges Gelenkgehäuse. Das Gelenkgehäuse weist einen im Wesentlichen zylinderförmigen Innenraum auf, in dem die Kugelschale des Kugelgelenks angeordnet ist. In der Kugelschale ist die Kugel des Kugelzapfens des Kugelgelenks gleitbeweglich aufnehmbar. In an sich ebenfalls bekannter Weise umfasst das Kugelgelenk ferner einen Dichtungsbalg, der die zapfenseitige Öffnung zwischen Gelenkgehäuse und Kugelzapfen elastisch beweglich verschließt, sowie eine Sensoreinrichtung zur Überwachung der Dichtigkeit des Gelenkinnenraums bzw. des Dichtungsbalgs.

Erfindungsgemäß zeichnet sich das Kugelgelenk jedoch dadurch aus, dass die Sensoreinrichtung einen Drucksensor umfasst.

Der Einsatz eines Drucksensors ist insofern vorteilhaft, als Drucksensoren mechanisch und chemisch sehr inert und robust ausgeführt werden können, ohne dass hierdurch die Messempfindlichkeit des Drucksensors nennenswert beeinträchtigt ist. Der Hintergrund für den Einsatz eines Drucksensors liegt darin, dass die Anmelderin erkannt hat, dass sich auch und gerade mit einem Drucksensor etwaige Undichtigkeiten des Dichtungsbalgs mit hoher Präzision und Zuverlässigkeit ermitteln lassen.

Dies hängt, wie sich gezeigt hat, damit zusammen, dass der Dichtungsbalg bei jeder Schwenk- bzw. Kippbewegung des Kugelzapfens gegenüber dem Gelenkgehäuse dergestalt verformt wird, dass sich das durch den Dichtungsbalg eingeschlossene Volumen ändert. Ist der Dichtungsbalg dabei unbeschädigt, bzw. liegt vollständige Dichtigkeit des Kugelgelenks vor, so führt diese Volumenänderung unmittelbar auch zu einer Druckänderung im Innenraum des Dichtungsbalgs bzw. des Kugelgelenks.

Ist andererseits das Kugelgelenk, bzw. insbesondere der Dichtungsbalg undicht, so kann - bezüglich der Volumenänderungen des im Dichtungsbalg eingeschlossenen Volumens - bei den Schwenk- bzw. Kippbewegung des Kugelzapfens im Kugelgelenk ein Druckausgleich mit der Umgebung stattfinden.

Dies bedeutet jedoch, dass der Drucksensor des Kugelgelenks in einem solchen Fall keine, bzw. jedenfalls nicht so hohe Druckänderungen im Kugelgelenk mehr registriert, woraus wiederum mit großer Sicherheit auf Undichtigkeit des Kugelgelenks, bzw. zumeist des Dichtungsbalgs geschlossen werden kann. Die Verschleißmessung wird dabei durch atmosphärische Luftdruckschwankungen nicht gestört, da sich letztere im Langzeitbereich im Verlauf mehrerer Stunden abspielen, wohingegen die durch Kippbewegungen des Kugelgelenks ausgelösten Druckschwankungen im Bereich von nur wenigen Sekunden, oder sogar in Sekundenbruchteilen ablaufen.

Dabei ist es zur Verwirklichung der Erfindung zunächst einmal unwesentlich, wo und auf welche Weise der Drucksensor am Kugelgelenk angeordnet ist. Der Drucksensor kann beispielsweise im Bereich des Dichtungsbalgs oder an der Gelenkkugel angeordnet sein. Gemäß einer bevorzugten Ausführungsform der Erfindung ist der Drucksensor jedoch am Gelenkgehäuse angeordnet. Dies ist vorteilhaft insofern, als die Anbringung des Drucksensors sowie der Zuleitungen zum Drucksensor in diesem Fall besonders einfach, robust und damit zuverlässig erfolgen kann.

Vorzugsweise ist dabei der Drucksensor im Bereich des Gehäusedeckels des Gelenkgehäuses angeordnet, und besonders bevorzugt einstückig mit dem Gehäusedeckel ausgebildet bzw. mit dem Gehäusedeckel vergossen. Auf diese Weise ergibt sich eine besonders kompakte, robuste und dichte Verbindung zwischen Drucksensor und Gelenkgehäuse. Zudem ist der mit dem Gehäusedeckel verbundene Drucksensor besonders einfach, und damit kostengünstig am Kugelgelenk zu montieren.

Um den Drucksensor zusätzlich vor den im Kugelgelenk vorhandenen, bzw. vor etwa eindringenden, aggressiven Medien wie beispielsweise vor Salzwasser, zu schützen, ist gemäß einer weiteren bevorzugten Ausführungsform der Erfindung vorgesehen, dass der Drucksensor vom Innenraum des Gelenkgehäuses durch eine Membran separiert ist. Auf diese Weise kann der Drucksensor - im Gegensatz zu den aus dem Stand der Technik bekannten Feuchtigkeitssensoren - hermetisch vom Innenraum des Kugelgelenks isoliert werden, ohne dass jedoch die Empfindlichkeit der Detektion von Undichtigkeiten nennenswert beeinträchtigt wäre.

Zur Erhöhung der Ansprechgeschwindigkeit des Drucksensors ist gemäß einer weiteren, bevorzugten Ausführungsform der Erfindung zumindest eine Druckausgleichsbohrung zwischen dem Innenraum des Dichtungsbalgs und der Deckelseite des Gelenkgehäuseinnenraums vorgesehen. Dank der Druckausgleichsbohrung kann die zur Detektion der Undichtigkeiten notwendige Fortpflanzung von Druckschwankungen aus dem Innenraum des zapfenseitig angeordneten Dichtungsbalgs zum gehäusedeckelseitig angeordneten Drucksensor praktisch ohne Zeitverzögerung erfolgen. Auf diese Weise können rasch erfolgende Druckänderungen mit hoher Empfindlichkeit detektiert werden insbesondere dann, wenn zwischen der Gelenkkugel und der Kugelschale kein Lagerspiel vorhanden ist, bzw. wenn die Kugelschale keine Schmiernuten aufweist, durch die sich Druckschwankungen fortpflanzen könnten.

Prinzipiell können Undichtigkeiten am Kugelgelenk bereits dadurch erkannt werden, dass über eine gewisse Zeit, beispielsweise während einer gewissen Anzahl an Betriebsstunden eines Kraftfahrzeugs, keine raschen Druckschwankungen mehr im Kugelgelenk registriert werden. Denn daraus kann geschlossen werden, dass trotz der während mehrerer Betriebsstunden mit Sicherheit zu erwartenden entsprechenden Kipp- bzw. Schwenkbewegungen des Kugelgelenks die damit normalerweise verbundenen Druckschwankungen im Innenraum des Kugelgelenks nicht aufgetreten sind, was bereits als sicheres Anzeichen für eine Undichtigkeit des Kugelgelenks gewertet werden kann.

Um die Erkennung der Undichtigkeiten noch weiter zu verbessern und zu beschleunigen, und um die Sicherheit der Erkennung weiter zu erhöhen, ist es gemäß einer weiteren bevorzugten Ausführungsform der Erfindung vorgesehen, dass das Kugelgelenk eine weitere Sensoreinrichtung aufweist. Die weitere Sensoreinrichtung dient dabei zur Ermittlung der Kippwinkelstellung des Kugelzapfens relativ zum Gelenkgehäuse.

Auf diese Weise können auch die Signale des zusätzlichen Kippwinkelsensors herangezogen werden, um eine besonders präzise Aussage über die Dichtigkeit des Kugelgelenks machen zu können. Denn eine bestimmte Kippwinkelstellung des Kugelzapfens im Gelenkgehäuse geht, wie die Anmelderin erkannt hat, stets mit einer annähernd phasengleich verlaufenden bestimmten Druckänderung im Gelenkgehäuseinnenraum einher, solange keine Undichtigkeiten vorliegen. Meldet also beispielsweise der Kippwinkelsensor einen bestimmten Kippwinkel zwischen Kugelzapfen und Gelenkgehäuse, und bleibt das bei diesem Kippwinkel zu erwartende Signal des Drucksensors aus, so kann mit großer Sicherheit sofort auf eine aufgetretene Undichtigkeit geschlossen werden.

Die Erfindung betrifft ferner ein Verfahren zur Dichtigkeitserkennung an einem Kugelgelenk gemäß Patentanspruch 9. Das erfindungsgemäße Verfahren dient zur Erkennung der Dichtigkeit eines Kugelgelenks mit Dichtungsbalg, wobei das Kugelgelenk einen Drucksensor aufweist.

Hierzu wird in einem ersten Verfahrensschritt der Druckgradient im Innenraum des Kugelgelenks bzw. des Dichtungsbalgs während einer Kippbewegung des Kugelzapfens im Gelenkgehäuse ermittelt. Anschließend wird der ermittelte Betrag des Druckgradienten mit einem Sollwert verglichen, und es wird bei Unterschreitung des Sollwerts eine Warnung bezüglich einer möglichen Undichtigkeit ausgegeben.

Dabei ist es zur Verwirklichung des erfindungsgemäßen Verfahrens zunächst unerheblich, auf welche Weise ermittelt wird, ob eine Kippbewegung des Kugelzapfens stattgefunden hat. Beispielsweise können bereits aufgrund statistischer Zusammenhänge Aussagen über die Wahrscheinlichkeit von Kippbewegungen während einer bestimmten Betriebsdauer des Kugelgelenks gemacht werden, so dass beim Ausbleiben entsprechender Druckgradienten-Messwerte über eine bestimmte Zeitdauer bereits mit großer Sicherheit auf eine Undichtigkeit des Kugelgelenks geschlossen werden kann.

Gemäß einer weiteren Ausführungsform des erfindungsgemäßen Verfahrens erfolgt die Feststellung der Kippbewegung des Kugelzapfens im ersten Verfahrensschritt anhand von Messdaten über den Fahrzustand des Kraftfahrzeugs. Dabei kann es sich beispielsweise, jedoch keineswegs ausschließlich, um den Lenkeinschlagswinkel, den Einfederungsweg, um Daten bezüglich der Nick- oder Wankbewegung des Fahrzeugaufbaus, und/oder um fahrdynamische Daten handeln.

Nach einer weiteren, bevorzugten Ausführungsform des erfindungsgemäßen Verfahrens erfolgt die Feststellung der Kippbewegung des Kugelzapfens im ersten Verfahrensschritt mit Hilfe einer am Kugelgelenk bzw. im Kugelgelenk angeordneten, weiteren Sensoreinrichtung. Dabei weist die Sensoreinrichtung zumindest einen Kippwinkel - bzw. Positionssensor zur Ermittlung der Relativposition bzw. des Relativwinkels zwischen Kugelzapfen und Gelenkgehäuse auf.

Dank der weiteren Sensoreinrichtung lässt sich feststellen, zu welchem Zeitpunkt das Kugelgelenk einer Kippbewegung unterliegt, die so groß ist, dass im Falle eines unbeschädigten Dichtungsbalgs eine zeitgleich mit der Kippbewegung stattfindende Druckänderung im Innenraum des Dichtungsbalgs bzw. im Gelenkgehäuseinnenraum auftreten müsste. Ändert sich in einem solchen Fall der Innendruck im Gelenkgehäuse bzw. im Innenraum des Dichtungsbalgs nicht in der erwarteten, charakteristischen Weise und Höhe, so kann mit großer Sicherheit sofort auf eine Beschädigung des Dichtungsbalgs geschlossen und die dementsprechende Warnung ausgegeben werden.

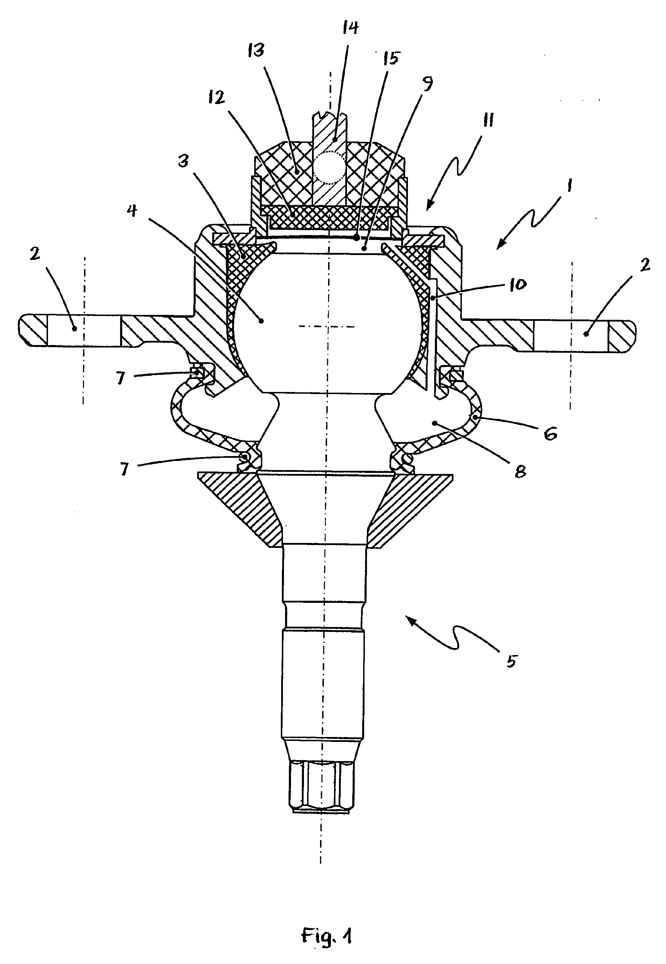

Im Folgenden wird die Erfindung anhand einer lediglich ein Ausführungsbeispiel darstellender Zeichnung näher erläutert. Dabei zeigt die einzige
- **Figur 1**: in schematischer Darstellung ein Kugelgelenk gemäß der vorliegenden Erfindung im Längsschnitt.

Die **Figur 1** zeigt im schematischen Längsschnitt eine Ausführungsform eines erfindungsgemäßen Kugelgelenks. Man erkennt zunächst das im Wesentlichen topfförmige Gelenkgehäuse 1 mit Befestigungsflanschen 2 sowie mit der im Gelenkgehäuse 1 angeordneten Lagerschale bzw. Kugelschale 3. Im Innenraum der Kugelschale 3 wiederum ist die Kugel 4 eines Kugelzapfens 5 angeordnet.

Ferner erkennt man einen Elastomer-Dichtungsbalg 6, der mittels Federringen 7 dicht anliegend mit dem Schaft des Kugelzapfens 5 sowie mit einer Nut am Gelenkgehäuse 1 verbunden ist. Der Dichtungsbalg 6 schließt in seinem Innenraum 8 ein gewisses Volumen ein, das im Allgemeinen mit Luft, oder auch teilweise mit Schmierstoff angefüllt sein kann. Wie sich gezeigt hat, tritt bei Schwenkbewegungen des Kugelzapfens 5 gegenüber dem Gelenkgehäuse 1 aufgrund der Verformung des Dichtungsbalgs 6 eine Veränderung (zumeist eine Verkleinerung) des im Inneren des Dichtungsbalgs 6 eingeschlossenen Volumens 8 ein, die um so deutlicher ausfällt, je größer der Schwenkwinkelausschlag des Kugelzapfens 5 gegenüber dem Gelenkgehäuse 1 ist.

Diese Veränderung des im Dichtungsbalg 6 enthaltenen Volumens 8 geht jedoch zwangsläufig mit einer entsprechenden Druckänderung einher, jedenfalls solange Dichtungsbalg 6 und Kugelgelenk keine Undichtigkeiten oder Beschädigungen aufweisen.

Da das in der Figur dargestellte Kugelgelenk keine Schmiernuten in der Kugelschale 3 aufweist, durch die sich die Druckänderungen aus dem Innenraum des Dichtungsbalgs 8 in den Kopfraum 9 des Gelenkgehäuses 1 fortpflanzen könnten, ist das Gelenkgehäuse 1 mit zumindest einer Druckausgleichsbohrung 10 versehen, die den Innenraum 8 des Dichtungsbalgs 6 mit dem Kopfraum 9 des Gelenkgehäuses 1 durchgängig verbindet.

Auf diese Weise können sich die Druckänderungen im Innenraum 8 des Dichtungsbalgs 6 unmittelbar in den Kopfraum 9 des Gelenkgehäuses 1 fortpflanzen, wo die Druckänderungen von dem im Bereich des Gehäusedeckels 11 angeordneten Drucksensor 12 ohne Zeitverzögerung registriert werden können. Im dargestellten Ausführungsbeispiel ist der (lediglich schematisch angedeutete) Drucksensor 12 mit einem Teil des Gehäusedeckels 11 mittels einer Vergussmasse 13 fest und dicht abschließend verbunden. Die Vergussmasse 13 schließt auch das Zuleitungskabel 14, das den Drucksensor 12 mit einer entsprechenden (nicht dargestellten) Auswertungselektronik verbindet, fest und zuverlässig ein.

Die Anordnung des Drucksensors 12 am bzw. im Gehäusedeckel 11 ist auch insofern vorteilhaft, als auf diese Weise vorhandene Kugelgelenke - mit keinen oder mit nur geringen Modifikationen - mit einem Drucksensor 12, bzw. mit der erfindungsgemäßen Dichtigkeitserkennung ausgestattet werden können.

Zum zusätzlichen Schutz des Drucksensors 12 vor den im Kugelgelenk enthaltenen Schmierstoffen, bzw. vor etwa eindringenden aggressiven Substanzen wie beispielsweise Salzwasser, ist zwischen dem Kopfraum 9 des Gelenkgehäuses 1 und dem Drucksensor 12 eine flexible Membran 15 angeordnet. Die Membran 15 schließt den Drucksensor 12 hermetisch vom Kopfraum 9 des Gelenkgehäuses 1 ab und schützt ihn somit vollständig vor Verunreinigungen oder chemisch aggressiven Substanzen, ohne dass die Empfindlichkeit der Dichtigkeitserkennung dadurch nennenswert beeinträchtigt wäre.

Im Ergebnis wird demnach deutlich, dass dank der Erfindung ein Kugelgelenk geschaffen wird, das die sofortige und zuverlässige Erkennung von Undichtigkeiten - insbesondere aufgrund von Beschädigungen oder Alterungserscheinungen des Dichtungsbalgs - ermöglicht. Dabei ist die Gefahr der Beschädigung des zur Verschleißerkennung eingesetzten Sensors durch Betriebsstoffe oder eingedrungene Substanzen, im Gegensatz zum Stand der Technik, vollständig ausgeschlossen. Die Erfindung leistet damit einen wertvollen Beitrag zur Verbesserung der Sicherheit, Zuverlässigkeit und Ausfallprävention von Kugelgelenken, insbesondere in Bezug auf die Anwendung im Bereich anspruchsvoller Achssysteme und Radaufhängungen am Kraftfahrzeug.

### Bezugszeichenliste

- 1: Gelenkgehäuse
- 2: Befestigungsflansch
- 3: Kugelschale
- 4: Gelenkkugel
- 5: Kugelzapfen
- 6: Dichtungsbalg
- 7: Federringe
- 8: Dichtungsbalg-Innenraum
- 9: Gelenkgehäuse-Kopfraum
- 10: Druckausgleichsbohrung
- 11: Gehäusedeckel
- 12: Drucksensor
- 13: Vergussmasse
- 14: Zuleitungskabel
- 15: Membran

## Patentansprüche

1. Kugelgelenk, beispielsweise für ein Achssystem eines Kraftfahrzeugs, mit einem im Wesentlichen ring- oder topfförmigen Gelenkgehäuse (1), in dessen im Wesentlichen zylinderförmigem Innenraum eine Kugelschale (3) angeordnet ist, wobei in der Kugelschale (3) die Kugel (4) eines Kugelzapfens (5) gleitbeweglich aufgenommen ist, das Kugelgelenk aufweisend ferner einen Dichtungsbalg (6) zwischen Gelenkgehäuse (1) und Kugelzapfen (5), sowie eine Sensoreinrichtung zur Überwachung der Dichtigkeit,
**dadurch gekennzeichnet,**
**dass** die Sensoreinrichtung einen Drucksensor (12) umfasst.

2. Kugelgelenk nach Anspruch 1,
**dadurch gekennzeichnet,**
**dass** der Drucksensor (12) am Gelenkgehäuse (1) angeordnet ist.

3. Kugelgelenk nach Anspruch 1 oder 2,
**dadurch gekennzeichnet,**
**dass** der Drucksensor (12) im Bereich eines Gehäusedeckels (11) des Gelenkgehäuses (1) angeordnet ist.

4. Kugelgelenk nach Anspruch 3,
**dadurch gekennzeichnet,**
**dass** der Drucksensor (12) mit dem Gehäusedeckel (11) einstückig ausgebildet bzw. vergossen ist.

5. Kugelgelenk nach einem der Ansprüche 1 bis 4,
**dadurch gekennzeichnet,**
**dass** der Drucksensor (12) vom Innenraum (9) des Gelenkgehäuses (1) durch eine Membran (15) separiert ist.

6. Kugelgelenk nach einem der Ansprüche 1 bis 5,
**gekennzeichnet durch**
zumindest eine Druckausgleichsbohrung (10) zwischen dem Innenraum (8) des Dichtungsbalgs (6) und der Deckelseite des Gelenkgehäuseinnenraums (9).

7. Kugelgelenk nach einem der Ansprüche 1 bis 6,
**dadurch gekennzeichnet,**
**dass** das Kugelgelenk eine weitere Sensoreinrichtung zur Ermittlung der Kippwinkelstellung des Kugelzapfens (5) relativ zum Gelenkgehäuse (1) umfasst.

8. Kugelgelenk nach Anspruch 7,
**dadurch gekennzeichnet,**
**dass** die weitere Sensoreinrichtung zumindest einen berührungslos, insbesondere magnetisch wirkenden Kippwinkelsensor umfasst.

9. Verfahren zur Dichtigkeitserkennung an einem Kugelgelenk mit Dichtungsbalg (6) und Drucksensor (12) mit den Verfahrensschritten:
a) Ermittlung des Druckgradienten im Innenraum (8) des Dichtungsbalgs während einer Kippbewegung des Kugelzapfens (5) im Gelenkgehäuse (1);
b) Vergleich des Druckgradientenbetrags mit einem Sollwert; und
c) Ausgabe einer Warnung bei Unterschreitung des Sollwerts.

10. Verfahren zur Verschleißmessung nach Anspruch 9,
**dadurch gekennzeichnet,**
**dass** das Kugelgelenk in ein Fahrzeug eingebaut ist, und dass im Verfahrensschritt a) die Feststellung der Kippbewegung des Kugelzapfens (5) anhand von Daten über den Fahrzustand des Kraftfahrzeugs erfolgt.

11. Verfahren zur Verschleißmessung nach Anspruch 9,
**dadurch gekennzeichnet,**
**dass** im Verfahrensschritt a) die Feststellung der Kippbewegung des Kugelzapfens (5) mit Hilfe einer am bzw. im Kugelgelenk angeordneten weiteren Sensoreinrichtung mit zumindest einem Kippwinkelsensor erfolgt.

## Claims

1. Ball-and-socket joint, for example for an axle system of a motor vehicle, having a substantially annular or pot-shaped joint housing (1), in whose substantially cylindrical inner space a ball socket (3) is arranged, the ball (4) of a ball stud (5) being slidably received in the ball socket (3), the ball-and-socket joint further having a sealing bellows (6) between joint housing (1) and ball stud (5), and a sensor device for monitoring the tightness,
**characterised in that**
the sensor device comprises a pressure sensor (12).

2. Ball-and-socket joint according to Claim 1,
**characterised in that**
the pressure sensor (12) is arranged on the joint housing (1).

3. Ball-and-socket joint according to Claim 1 or 2,
**characterised in that**
the pressure sensor (12) is arranged in the region of a housing cover (11) of the joint housing (1).

4. Ball-and-socket joint according to Claim 3,
**characterised in that**
the pressure sensor (12) is formed or cast in one piece with the housing cover (11).

5. Ball-and-socket joint according to one of Claims 1 to 4,
**characterised in that**
the pressure sensor (12) is separated from the inner space (9) of the joint housing (1) by a diaphragm (15).

6. Ball-and-socket joint according to one of Claims 1 to 5,
**characterised by**
at least one pressure equalising bore (10) between the inner space (8) of the sealing bellows (6) and the cover side of the joint housing inner space (9).

7. Ball-and-socket joint according to one of Claims 1 to 6,
**characterised in that**
the ball-and-socket joint comprises a further sensor device for determining the tilt angle position of the ball stud (5) relative to the joint housing (1).

8. Ball-and-socket joint according to Claim 7,
**characterised in that**
the further sensor device comprises at least one tilt angle sensor acting contactlessly, in particular magnetically.

9. Method for tightness detection on a ball-and-socket joint having a sealing bellows (6) and a pressure sensor (12), having the method steps:
a) Determination of the pressure gradient in the inner space (8) of the sealing bellows during a tilting movement of the ball stud (5) in the joint housing (1);
b) Comparison of the pressure gradient magnitude with a setpoint; and
c) Issuing of a warning if the magnitude falls below the setpoint.

10. Method for wear measurement according to Claim 9,
**characterised in that**
the ball-and-socket joint is installed in a vehicle, and **in that** in the method step a) the determination of the tilting movement of the ball stud (5) is carried out using data on the driving state of the motor vehicle.

11. Method for wear measurement according to Claim 9,
**characterised in that**
in the method step a) the determination of the tilting movement of the ball stud (5) is carried out with the aid of a further sensor device arranged on or in the ball-and-socket joint and having at least one tilt angle sensor.

## Revendications

1. Articulation à rotule, par exemple pour un système d'essieu d'un véhicule automobile, comprenant un boîtier d'articulation (1) essentiellement annulaire ou en boisseau, où une coquille sphérique (3) est disposée dans la cavité intérieure essentiellement cylindrique du boîtier, la rotule (4) d'un pivot à rotule (5) étant reçue dans la coquille sphérique (3), l'articulation à rotule comprenant en outre un soufflet d'étanchéité (6) placé entre le boîtier d'articulation (1) et le pivot à rotule (5), ainsi qu'un dispositif détecteur destiné à surveiller l'étanchéité,
**caractérisée en ce que**
le dispositif détecteur comprend un capteur de pression (12).

2. Articulation à rotule selon la revendication 1,
**caractérisée en ce que**
le capteur de pression (12) est monté sur le boîtier d'articulation (1).

3. Articulation à rotule selon la revendication 1 ou 2,
**caractérisée en ce que**
le capteur de pression (12) est disposé au niveau d'un couvercle de boîtier (11) du boîtier d'articulation (1).

4. Articulation à rotule selon la revendication 3,
**caractérisé en ce que**
le capteur de pression (12) est réalisé d'un seul tenant avec, ou moulé dans, le couvercle de boîtier (11).

5. Articulation à rotule selon l'une des revendications 1 à 4,
**caractérisée en ce que**
le capteur de pression (12) est séparé de la cavité intérieure (9) du boîtier d'articulation (1) par une membrane (15).

6. Articulation à rotule selon l'une des revendications 1 à 5,
**caractérisée par**
au moins un perçage d'équilibrage des pressions (10) entre la cavité intérieure (8) du soufflet d'étanchéité (6) et le côté couvercle de la cavité intérieure (9) du boîtier d'articulation.

7. Articulation à rotule selon l'une des revendications 1 à 6,
**caractérisée en ce que**
l'articulation à rotule comprend un autre dispositif détecteur destiné à déterminer la position angulaire d'inclinaison du pivot à rotule (5) par rapport au boîtier d'articulation (1).

8. Articulation à rotule selon la revendication 7,
**caractérisée en ce que**
l'autre dispositif détecteur comprend au moins un capteur d'angle d'inclinaison à action sans contact, en particulier à action magnétique.

9. Procédé de détection d'étanchéité sur une articulation à rotule comprenant un soufflet d'étanchéité (6) et un capteur de pression (12), comprenant les étapes de procédure suivantes :
a) détermination d'un gradient de pression dans la cavité intérieure (8) du soufflet d'étanchéité pendant un mouvement d'inclinaison du pivot à rotule (5) dans le boîtier d'articulation (1) ;
b) comparaison entre la valeur du gradient de pression et une valeur consigne ; et
c) émission d'un avertissement en cas de passage sous la valeur consigne.

10. Procédé de mesure d'usure selon la revendication 9,
**caractérisé en ce que**
l'articulation à rotule est montée dans un véhicule, et qu'à l'étape a), la détermination du mouvement d'inclinaison du pivot à rotule (5) se fait par l'intermédiaire de données concernant l'état de marche du véhicule automobile.

11. Procédé de mesure d'usure selon la revendication 9,
**caractérisé en ce que**
à l'étape a), la détermination du mouvement d'inclinaison du pivot à rotule (5) se fait à l'aide d'un autre dispositif détecteur disposé sur ou dans l'articulation à rotule, comprenant au moins un détecteur d'angle d'inclinaison.
